# EUROPEAN PATENT APPLICATION

(11) **EP 2 905 739 A1**
(43) Date of publication of application: **12.08.2015**
(21) Application number: 14189817.1
(22) Date of filing: 22.10.2014
(51) Int. Cl.: G06Q 30/04, H04L 9/00, H04L 9/08, H04L 29/06

(54) **Electronic bills management system and electronic bills management method**

(30) Priority: 05.02.2014 PL 40708814
(71) Applicant: "E-JA" Sp. z o.o., 00-040 Warszawa (PL)
(72) Inventor: Pastuszak, Tomasz, 03-171 Warszawa (PL)
(74) Representative: Pawlowski, Adam

(57) **Abstract**

A computer-implemented electronic invoices managing method characterized in that it comprises the steps of: authorising at least two invoice issuers to issue invoices in the computer system of electronic invoices and saving the data of invoice issuers in the computer database of invoice issuers; authorising at least two invoice receivers to receive invoices in the computer system of electronic invoices and saving the data of invoice receivers in the computer database of invoice receivers; receiving and executing, by means of telecommunication links, the request to issue the invoice by one of the authorised invoice issuers for the given receiver; entitling the receiver to read the invoices by means of authorisation; presenting the invoices in response to the receiver's request in order to order execution of the payment for the selected invoice of the receiver in the system; and presenting the status of the completion of the payment upon the issuer's request.

## Description

### TECHNICAL FIELD

The object of the present invention is a computer-implemented electronic invoices (bills) managing system as well as an electronic invoices managing method. This solution is particularly addressed towards mass invoices issuers, such as telecommunication companies, suppliers of energy, water or television.

### BACKGROUND

Invoices (bills) issued by service providers or commodity sellers may be delivered in a traditional way, meaning in a printed form, or in an electronic form. In the electronic form the invoices may be delivered in any electronic format, for example in a pdf format. Electronic invoices are becoming more popular, mainly due to the decrease in processing costs and easiness of access.

In solutions known in the market the invoice issuers inform the client, for example by means of an SMS message or an electronic mail, about issuing of a new invoice, which is subsequently downloaded by the client from a computer system of the issuer. In order to download the invoices, client authorisation is usually required. The client then copies the data from the invoices in order to enter them into his bank system in order to complete the payments.

For example, numerous mobile network operators currently provide mass issuing of electronic invoices. The process is however independent between various service providers and the user must have numerous accounts and numerous access passwords for different invoice services. Mobile network system operators mostly issue invoices and share them in the pdf format in customer services. It is comfortable and cheap from the issuer's standpoint, since it does not involve the costs of using an external service, but does not have much value for the receiver. The receiver may only manually copy the information from the invoice into the payment document and furthermore must print the invoice in order to store it. In such solution, the whole work related to handling the payment is transferred to the invoice receiver. This is the main reason of the low share of electronic invoices in all issued invoices. The receivers are not interested in receiving documents in such form.

One disadvantage of the solution described above is also the lack of automation of transferring the invoice data between the invoice issuer's system and the client's bank system which is used to complete the payment.

One solution of this problem is a direct debit service, according to which the client may authorise the issuer to convey the invoice to the client's bank and authorise the client's bank to pay the invoices from the indicated client in conformance with the time limit for the payment.

One disadvantage of such system is a certain loss of control over the payments, which are completed fully automatically.

Due to the above, it would be reasonable to design an electronic invoices management system, which would manage invoices originating from numerous issuers and allow management of numerous payments from one location without the necessity to use the direct debit service.

### SUMMARY OF THE INVENTION

An object of the present invention is a computer-implemented electronic invoices managing method characterized in that it comprises the steps of: authorising at least two invoice issuers to issue invoices in the computer system of electronic invoices and saving the data of invoice issuers in the computer database of invoice issuers; authorising at least two invoice receivers to receive invoices in the computer system of electronic invoices and saving the data of invoice receivers in the computer database of invoice receivers; receiving and executing, by means of telecommunication links, the request to issue the invoice by one of the authorised invoice issuers for the given receiver; entitling the receiver to read the invoices by means of authorisation; presenting the invoices in response to the receiver's request in order to order execution of the payment for the selected invoice of the receiver in the system; and presenting the status of the completion of the payment upon the issuer's request.

Preferably, the data given in the authorisation steps are encrypted in the user terminal and transferring this data in an encrypted form.

Preferably, the user's encrypted private and public key are stored in the authorisation repository separate from the user data buffer, in which only the public key is stored.

Preferably, the user's authorisation medium is a cryptographic card or a file, or a network service of storing the encrypted user authorisation.

Preferably, each user data buffer comprises at least: the user's encrypted data divided into folders and files: identification data, personal and address data; and the management data: an event register, a settling account, the public key from authorisation.

Another object of the present invention is a computerized, electronic invoice management system comprising the memory and the data bus, wherein the system comprises additionally the following connected to the data bus: a database of invoice issuers comprising information regarding issuers; a database of invoice receivers comprising the identification data of the receivers; a database of entities executing the payments comprising the identification data of entities authorised to complete the payment of issuers' invoices by the receivers; an authorisation database storing the data required for authorisation of electronic signatures and connections between the receiver's clients; a database of invoice documents.

The system further comprises a controller configured to cooperate with the database of invoice issuers, the database of invoice receivers, the database of entities completing the payments, the authorisation database, the database of invoice documents and configured to implement the method comprising the following steps: authorising at least two invoice issuers to issue invoices in the computer electronic invoice system and saving the data of invoice issuers in the computer database of invoice issuers; authorising at least two invoice receivers to receive invoices in the computer electronic invoice system and saving the data of invoice receivers in the computer database of invoice receivers; receiving and executing, by means of telecommunication links, the request to issue invoice by one of the authorised invoice issuers for the given receiver; entitling the receiver to read the invoice by means of authorisation; presenting the invoices in response to the receiver's request in order to order execution of the payment for the selected receiver's invoice in the system; presenting the status of the completion of the payment upon the issuer's request.

Preferably, the database of invoice receivers and the database of invoice issuers is a repository of personal data buffers comprising the encrypted identification data of the issuers and the receivers.

### BRIEF DESCRIPTION OF THE DRAWINGS

The object of the invention has been presented by means of an exemplary embodiment in a drawing, wherein:
Fig. 1 presents schematically transfer of data between a repository and a user;
Fig. 2 presents a process of constructing and sending a request (to create a licence/save data in a data buffer) by the user;
Fig. 3 presents processing of the request by the repository;
Fig. 4 presents an invoice issuing process;
Fig. 5 presents a process of sharing the invoices with receivers;
Fig. 6 presents invoices browsing method;
Fig. 7 presents the system according to the present invention; and
Fig. 8 presents the method according to the present invention.

### DETAILED DESCRIPTION

The presented system is based on an assumption that there are numerous invoice issuers, that issue invoices via the system according to the invention and there are numerous entities completing the payments. The entities completing the payments may be companies physically receiving orders from the customers, who have received invoices in the described system or they can also be electronic terminals enabling access to the client's invoices and selection of those invoices, which are to be paid.

The present invention solves the problem of information security. The use of the solution according to the present invention enables browsing the content of documents, associated with the payments, only by their issuer and receiver. The contents of the invoices are unknown even to the system operator, who only provides the prompt exchange of invoices between the issuers and the receivers.

The identification data and information is encrypted in the users' computers and transferred to the data buffers in an encrypted form. In case when the user loses his identification data, for example a password, it is not possible to generate a new password, because this password is used to decrypt the authorisation.

The encrypted private and public User's keys are stored in an Authorisation repository. Only the public key is stored in the user's data buffer - for this reason, it is impossible for the administrator to read the user's private key.

A licence is necessary for each information/group of information placed in the data buffer. Only the owner has the right to read or delete this data. Another user may have permission to read if he receives a licence from the owner.

The invoices in the system are shared with the clients in an xml format, therefore are readable by various computer systems of the receivers. If the receiver is an economic entity, the system enables downloading the invoices directly into the receiver's accounting system, performing electronic endorsement and storage of the document in a digital form.

This way, the necessity to print the invoices is avoided on both sides of the transaction. Moreover, the system enables comfortable invoice payment via electronic banking system, by automatically copying the invoice data to the money transfer instructions. If however the receiver is a natural person, he can view all the received invoices (for example for electricity, gas, telecommunication services, taxes etc.) in one place, from which he will make the payment in a simple manner without the necessity to copy the text information included in the invoices, since they are copied automatically for the money transfer.

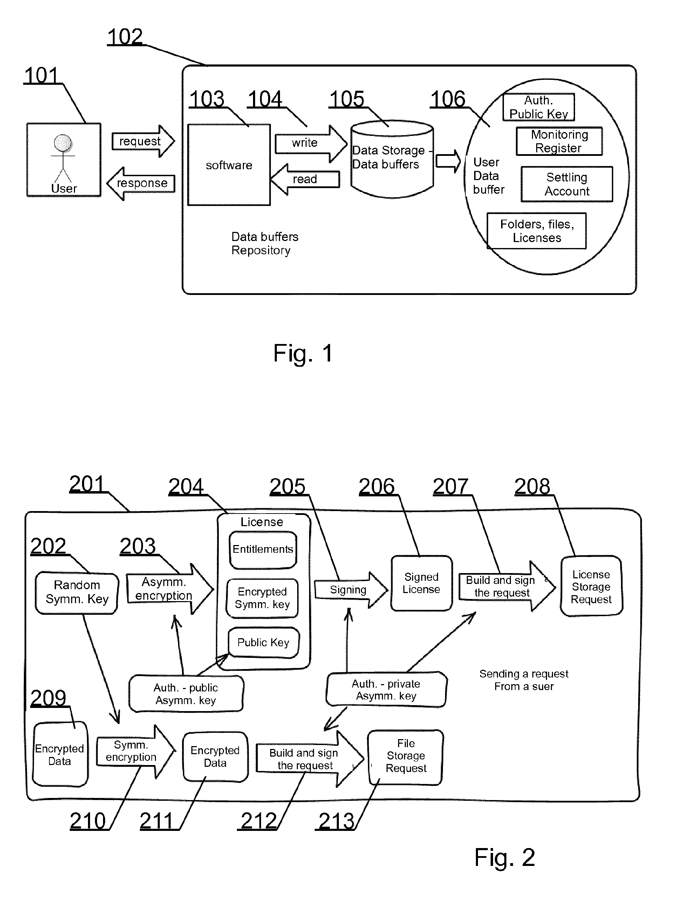

Fig. 1 presents schematically the transfer of data between the repository and the user. The user 101 may save and read the data present in his personal data buffer 106 using authorisation.

The authorisation is a unique pair of asymmetrical cryptographic keys, generated by the user 101 in the registration process, assigned to the user's identifier and data buffer and used in cryptographic processes of access to the user data buffer 106. User authorisation is encrypted and written in the authorisation repository or on another medium, only the public key is not encrypted.

The user authorisation medium may be a cryptographic card, a file, a network service of storing the encrypted user authorisation.

The Private Key from the authorisation is used by the user 101 to sign the requests to read and write the data in the user data buffer 106. The public key from authorisation is used by the server 102 to verify the signature under the requests of the user 101 and if the verification has been successful - the server executes the requests.

Each user data buffer 106 includes the following groups of data:
1. The encrypted user data divided into folders and files: identification data, personal data and address data;
2. Management data: Monitoring register - an event register, a settling account - payments for using the data buffer, public key from the authorisation.

The owner of the user data buffer 106 may share the data from his data buffer with other entities by adding a proper licence for them.

The user data buffers are saved in the user data buffer data storage 105, the access 104 to which can be granted by means of a proper software 103.

Fig. 2 presents the process of constructing and sending the request 201 (creating the licence/saving the data in the data buffer) by the user. In the case of saving, two situations may be distinguished: (a) there is no licence and (b) when there is licence.

The licence is required to save and read other encrypted information; it comprises the following data: the entitlements, the encrypted symmetrical key and the public key. In the case when there is no licence, the system detects the lack of licence and due to this selects a random symmetrical key 202 and encrypts it asymmetrically 203 using the public asymmetrical key from the user authorisation. The system creates the licence 204, for which it saves: (a) the entitlements, (b) the encrypted symmetrical key, (c) the user's public key.

The system then signs 205 the licence 204 using the private asymmetrical key from user authorisation in order to obtain a signed licence 206.

The system subsequently constructs and signs the request 207 to place the licence in the repository.

In the repository, the system according to the invention, verifies the signature under the request using the public asymmetrical key from user authorisation and places the licence in the repository. The user indicates the data, which will be encrypted and the system downloads the random symmetrical key 202 and encrypts the data symmetrically. The system further constructs and signs the request to place the encrypted data in the data buffer and in the repository system verifies the signature under the request using the public asymmetrical key from user authorisation and places the data in the repository.

In the case when the licence exists, the system downloads the licence from the user data buffer 106. It then reads the encrypted symmetrical key from the licence. The system decrypts [the symmetrical key] by means of the asymmetrical key and uses it to symmetrically encrypt 210 the data 209.

The system subsequently constructs and signs the request to place the encrypted data 211 in the user data buffer 106.

In the repository the system verifies the signature 212 under the request, using the public asymmetrical key from user authorisation, and places the data in the repository 213.

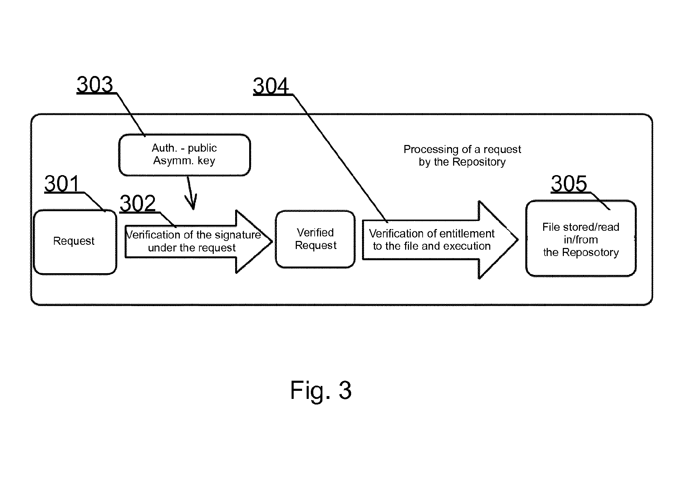

Fig. 3 presents processing of the request by the repository. Processing of the request takes place on the server. The request may be for example: (a) Downloading the licence from the data buffer, (b) Creating the licence in the data buffer, (c) Saving documents in the data buffer, (d) Displaying the list of documents from the data buffer or (e) Reading the data.

Processing of the request takes place in the following manner. The user 101 sends the request 301, for example to place or download the licence or save/read the data, to the repository. The system verifies the signature 302 under the request using the public asymmetrical key 303 from user authorisation.

The system. according to the invention. verifies the entitlements to the file 304 and in the case of positive verification the system downloads/places 305 the file from/in the repository. The file may be the licence or the document to be placed in the user data buffer 106.

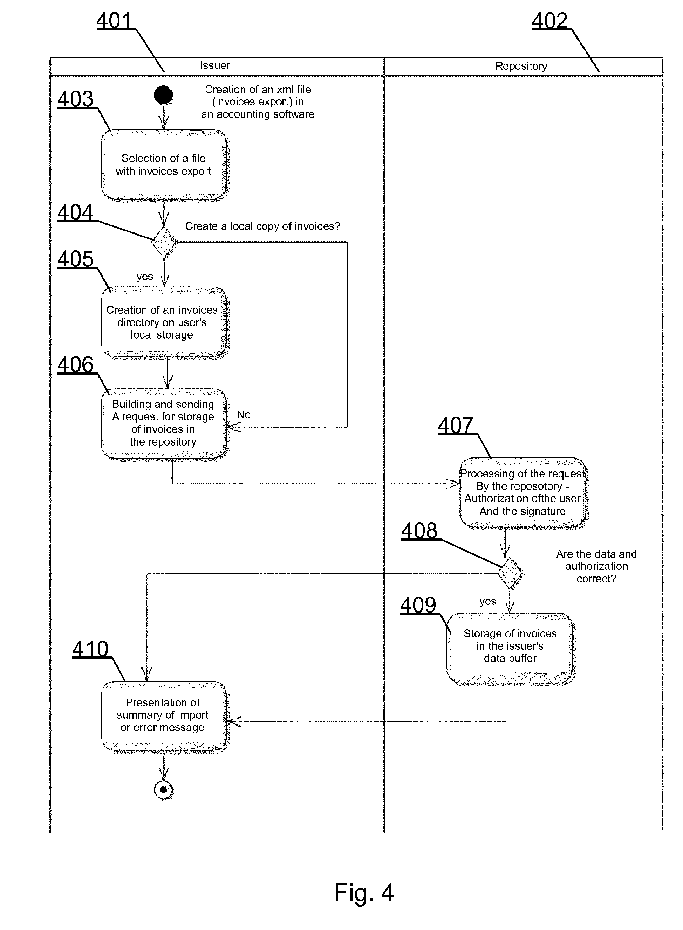

Fig. 4 presents the invoice issuing process. This process is aimed at enabling saving the invoices in the data buffer of the issuer and is executed between the issuer (part 401) and the system repository (part 402).

The issuer should be logged into the online system and have the correct file with the data for import. The system displays the proper page (data import page). The issuer indicates a path to the file 403 in his local computer.

The system displays the proper page (a window for browsing directories and files in an operating system). For example, the issuer selects the proper file and sends a request for its upload and the system displays the proper page (data import page complemented by the file name along with the path).

Optionally, the issuer defines whether he wants to create a directory with the invoices on the local computer disk 404 and the issuer further requests to import the data.

The system, according to the invention, then verifies the correctness of the entered data in order to build and send a request to save the invoices 406 in the data buffer of the issuer.

Subsequently, in step 407 the system downloads the public asymmetrical key from the Authorisation Repository and verifies the signature under the request. If the verification is correct 408, the system places the invoices in the data buffer of the issuer 409.

Finally, in step 410, the system closes the import page and displays the message informing about the proper completion of the import operations along with the information about the number of imported invoices.

Optionally, the system may detect that precisely the same data exists in the storage and generate a proper message. The system may also detect that the contents of the imported file are incorrect.

In order to complete the aforementioned method it is necessary to identify the accounting program, the data file and the available private key from the authorisation.

The result of the completion of the aforementioned method is saving the data from the file in the assigned space in the repository of the issuer.

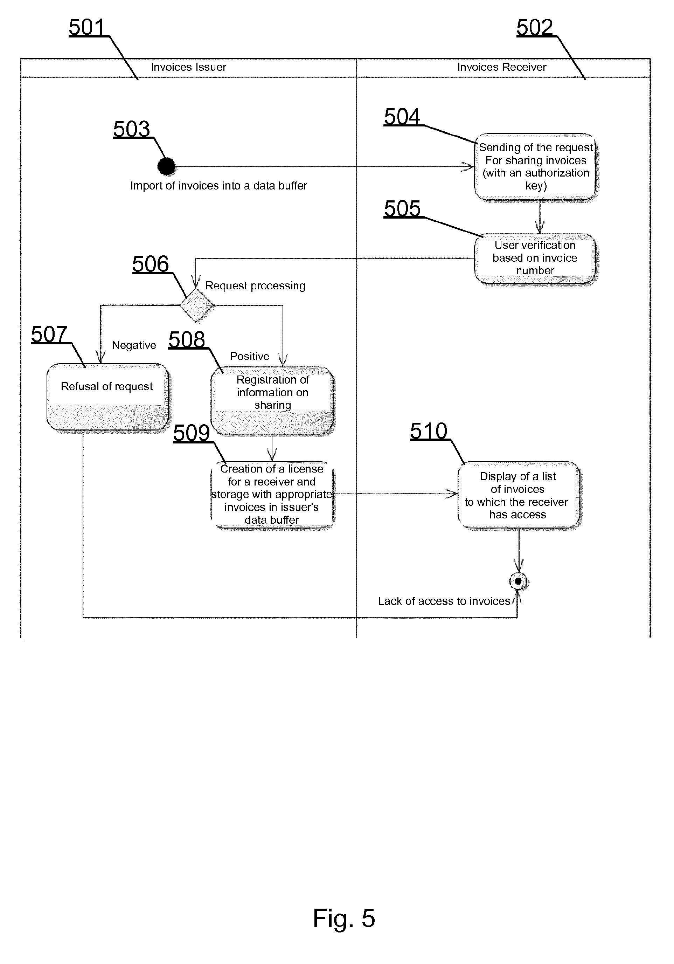

Fig. 5 presents the process of sharing the invoices with the receivers. This process is intended to send a request, to share the invoices, to a given issuer and it is executed under control of the system, between the issuer (part 501) and the receiver (part 502).

The receiver and the issuer should be logged into the system and the receiver should have ready the invoice number and the issuer number from one of the recently issued invoices 503. The event initiating the process may be displaying the form with the list of his issuers 504.

The system displays the proper page (the List of my issuers page) and the receiver of the invoices requests to add a new issuer to the list.

Next, in step 505, the system displays a window for entering the number of the last invoice and identification of the issuer, and the receiver of the invoices requests to send the data to the issuer.

Subsequently, in step 506, the system verifies the given data and places the request in the sharing register. The issuer of the invoice examines the request and upon successful verification of the data requests to share the invoice 508 and the system creates a licence for the given receiver 509 and places it with to the proper invoices in the data buffer of the issuer. In step 510 the list of invoices, to which the receiver has the licence, is displayed and the system changes the status of the request to "Invoice sharing approved".

The alternative scenario is rejecting the request, when the issuer of the invoices examines the request and requests rejecting the request 507, in result of which the system changes the status of the request to "Rejected".

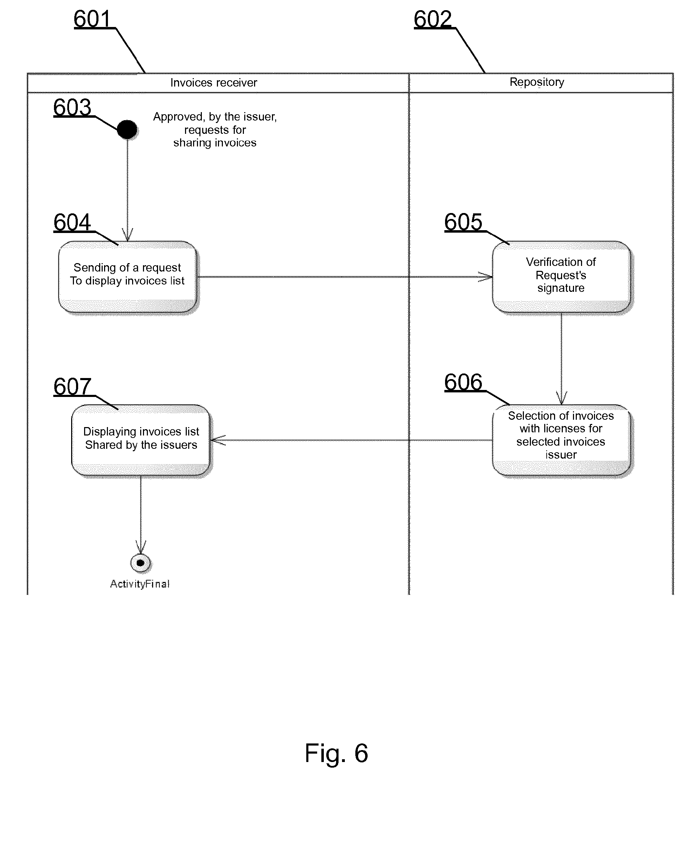

Fig. 6 presents the method of browsing the invoices. The goal of this method is to enable the receiver 601 to browse the invoices shared by various issuers in the repository 602. It is preferable for the receiver to be logged into the system and have at least one accepted request to share the invoices by at least one issuer 603.

Typically, the receiver will be granted access to the website of the system, which displays the "My invoices" form. The receiver requests 604 displaying the list of invoices from various issuers (My invoices page). In step 605 the system further verifies the signature under the request and selects the invoices 606 where the licences for the invoice receiver are. The final step is displaying the list of invoices for the given receiver 607 by the system.

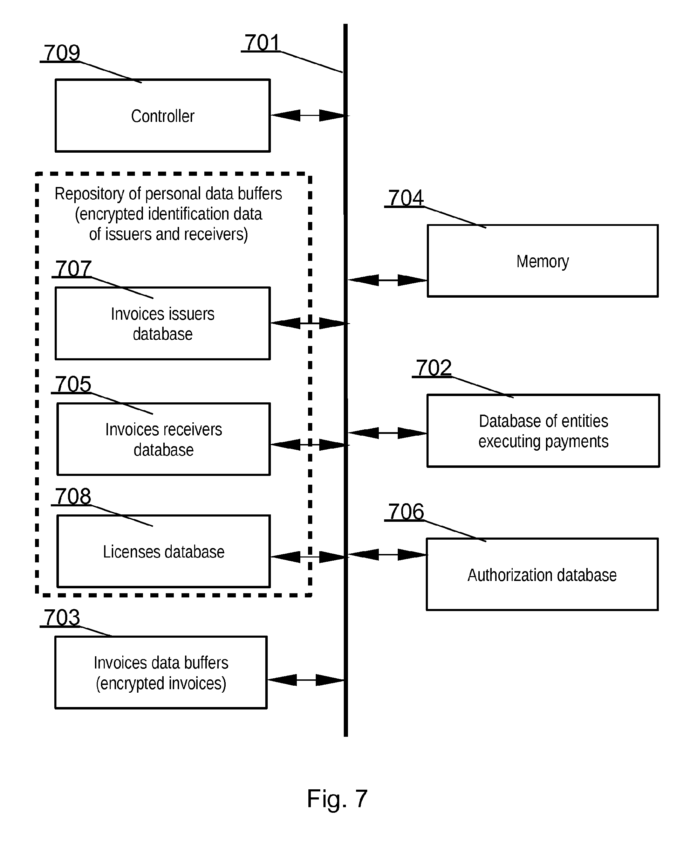

Fig. 7 presents the system according to the invention. The system may be realised by means of programmable hardware assemblies as well as the memory 704 and the proper data bus 701. The system collects invoices from numerous issuers and shares them with numerous receivers. Sharing may take place by means of proper terminals authorised by the system and belonging to the entities completing payments for the receivers.

The system according to the present invention comprises four main databases. The first database is the database of invoice issuers 707 comprising information regarding the issuers. The second database is the base of receivers 705 comprising the identification data of the receivers. Both of those databases 705 and 707 may be considered as the repository of personal data buffers (encrypted identification data of the issuers and the receivers), which also comprises the licences database 708.

The third database is the database 702 of the entities executing the payments comprising the identification data of the entities authorised to complete payments of the issuers' invoices by the receivers. The fourth database is the authorisation database 706, which stores the data (keys) required for the authorisation of electronic signatures and relations between clients and receivers, which are necessary for the execution of procedures presented in Fig. 1 to Fig. 6. This base may constitute or be a part of the authorisation repository.

The fifth database is the database of the invoice documents 703 themselves (Repository of the invoice Data Buffers comprising encrypted invoices and access licences allowing decryption of these invoices), to which all the concerned parties have access.

All the data access procedures for the issuers, receivers and authorised entities executing payments is managed by the controller 709. In particular, the task of the controller is management of the access to the system data.

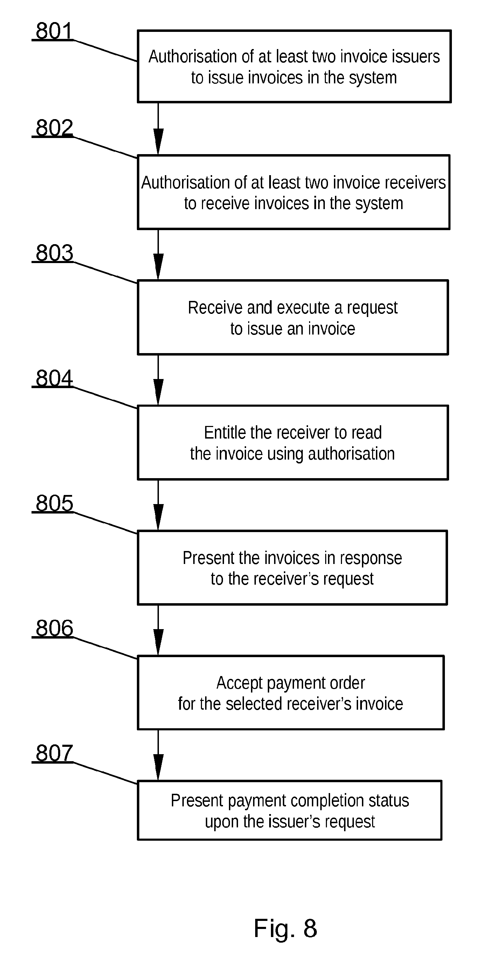

Fig. 8 presents the method according to the invention. The procedure begins in step 801 from authorisation of at least two invoice issuers to issue invoices in the system. The procedure of authorisation and assigning the licence has been presented in Fig. 2. In step 802, in a similar method, at least two invoice receivers are further authorised to receive invoices in the system.

In step 803, the request to issue the invoices is then received and executed by one of the authorised invoice issuers. A sample execution of this process has been presented in Fig. 3.

In step 804 the indicated receiver is then entitled to read the invoice using the authorisation and optionally informed (for example by means of an SMS message or e-mail) about the new invoice added in the system. In order to execute the payment, the entitled receiver must log into the system, which will present the invoices in response to the receiver's request 805 to order execution of the payment for the selected receiver's invoice 806 in the system. In order to do so, the receiver may have an account in the system or the system according to the invention may cooperate with the receiver's bank in order to automatically execute orders from the receiver.

Due to the electronic processing of both the invoices and the payments, the system offers, the receivers of electronic invoices, automatic filling of the payment documents, which eliminates the possibility of a mistake and the resulting consequences. The information necessary to complete the operation is stored by the system automatically.

The final step 807 is the presentation of the payment completion status upon the issuer's request. In the meantime the payment will be physically completed and the issuer will be informed about this fact.

According to the above implementation details, the system is advantageous due to the fact that each user of the system, both the invoice issuer as well as the receiver, has the informational space called the Data Buffer in the system and is the sole holder of the information included therein, which is stored in an encrypted form.

Moreover, each user utilises an individual and unique set of information called the Authorisation, comprising among other items the asymmetrical cryptographic keys, allowing management of the information in his own Data Buffer as well as the access to the information shared with him by other users in their Data Buffers.

The users of the system manage the information, which has been entered into the Data Buffer by granting the rights to access it utilising the licensing mechanism (the Licence) and the owned Authorisation; at the same time the system operator is not technically capable of reading and modifying the information stored in the users' Data Buffers.

The present system allows storing the Authorisation on various media such as: a cryptographic card, an Authorisation repository or a file, in a manner which makes it impossible to be used by unauthorised persons.

Additionally, the system according to the invention enables the issuer to share the same invoice with more than one entity (receiver) which is the system user and enables the invoice receiver to download invoices from numerous issuers at the same time using the same Authorisation without the necessity to log in each time.

Finally, the system makes it possible for the receiver to order the completion of the payment for the selected invoice and enables the issuer and the receiver to monitor processing of the invoice, including the fact of making the payment.

An obvious element of the project is the fact that the system allows access to the invoices for both the issuer and the receiver from various terminals such as: a computer, a mobile phone or a cash machine.

It can be easily recognized, by one skilled in the art, that the aforementioned a computer-implemented method and system for electronic invoices management may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein. Alternatively, the invention may be implemented with specific electronic circuits.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

## Claims

**1.** A computer-implemented electronic invoices managing method **characterized in that** it comprises the steps of:
- authorising (801) at least two invoice issuers to issue invoices in the computer system of electronic invoices and saving the data of invoice issuers in the computer database of invoice issuers (707);
- authorising (802) at least two invoice receivers to receive invoices in the computer system of electronic invoices and saving the data of invoice receivers in the computer database of invoice receivers (705);
- receiving and executing (803), by means of telecommunication links, the request to issue the invoice by one of the authorised invoice issuers for the given receiver;
- entitling (804) the receiver to read the invoices by means of authorisation;
- presenting the invoices in response to the receiver's request (805) in order to order execution of the payment for the selected invoice of the receiver in the system (806); and
- presenting the status of the completion of the payment upon the issuer's request (807).

**2.** The method according to claim 1, **characterized in that** it further comprises encrypting the data given in the authorisation steps in the user terminal and transferring this data in an encrypted form.

**3.** The method according to claim 2, **characterized in that** the user's encrypted private and public key are stored in the authorisation repository separate from the user data buffer, in which only the public key is stored.

**4.** The method according to claim 3, **characterized in that** the user's authorisation medium is a cryptographic card or a file, or a network service of storing the encrypted user authorisation.

**6.** The method according to claim 2, **characterized in that** each user data buffer (106) comprises at least:
- the user's encrypted data divided into folders and files: identification data, personal and address data; and
- the management data: an event register, a settling account, the public key from authorisation.

**7.** A computerized, electronic invoice management system comprising the memory (704) and the data bus (701), **characterized in that** the system comprises additionally the following connected to the data bus (701):
- a database of invoice issuers (707) comprising information regarding issuers;
- a database of invoice receivers (705) comprising the identification data of the receivers;
- a database of entities executing the payments (702) comprising the identification data of entities authorised to complete the payment of issuers' invoices by the receivers;
- an authorisation database (706) storing the data required for authorisation of electronic signatures and connections between the receiver's clients;
- a database of invoice documents (703); and
- a controller (709) configured to cooperate with the database of invoice issuers (707), the database of invoice receivers (705), the database of entities completing the payments (702), the authorisation database (706), the database of invoice documents (703) and configured to implement the method comprising the following steps:
- authorising (801) at least two invoice issuers to issue invoices in the computer electronic invoice system and saving the data of invoice issuers in the computer database of invoice issuers (707);
- authorising (802) at least two invoice receivers to receive invoices in the computer electronic invoice system and saving the data of invoice receivers in the computer database of invoice receivers (705);
- receiving and executing (803), by means of telecommunication links, the request to issue invoice by one of the authorised invoice issuers for the given receiver;
- entitling (804) the receiver to read the invoice by means of authorisation;
- presenting the invoices in response to the receiver's request (805) in order to order execution of the payment for the selected receiver's invoice (806) in the system;
- presenting the status of the completion of the payment upon the issuer's request (807).

**8.** A computerized, electronic invoice management system according to claim 7, **characterized in that** the database of invoice receivers (705) and the database of invoice issuers (707) is a repository of personal data buffers comprising the encrypted identification data of the issuers and the receivers.

## Amended claims

### Amended claims in accordance with Rule 137(2) EPC.

1. A computer-implemented electronic invoices managing method **characterized in that** it comprises the steps of:
- authorising (801) at least two invoice issuers to issue invoices in the computer system of electronic invoices and saving the data of invoice issuers in the computer database of invoice issuers (707);
- authorising (802) at least two invoice receivers to receive invoices in the computer system of electronic invoices and saving the data of invoice receivers in the computer database of invoice receivers (705);
- receiving and executing (803), by means of telecommunication links, the request to issue the invoice by one of the authorised invoice issuers for the given receiver;
- entitling (804) the receiver to read the invoices by means of authorisation;
- presenting the invoices in response to the receiver's request (805) in order to order execution of the payment for the selected invoice of the receiver in the system (806); and
- presenting the status of the completion of the payment upon the issuer's request (807).

2. The method according to claim 1, **characterized in that** the authorization (802) process comprises the following steps:
• detecting a lack of licence and selecting a random symmetrical key (202);
• asymmetrically encrypting (203) the random symmetrical key using the public asymmetrical key from a user authorisation;
• creating a licence (204), for which there are saved: (a) entitlements, (b) the encrypted symmetrical key, (c) the user's public key;
• signing (205) the licence (204) using the private asymmetrical key from user authorisation in order to obtain a signed licence (206); and
• storing (208) the signed license (206).

3. The method according to claim 1, **characterized in that** it further comprises encrypting the data given in the authorisation steps in the user terminal and transferring this data in an encrypted form.

4. The method according to claim 3, **characterized in that** the user's encrypted private and public key are stored in the authorisation repository separate from the user data buffer, in which only the public key is stored.

5. The method according to claim 4, **characterized in that** the user's authorisation medium is a cryptographic card or a file, or a network service of storing the encrypted user authorisation.

6. The method according to claim 3, **characterized in that** each user data buffer (106) comprises at least:
- the user's encrypted data divided into folders and files: identification data, personal and address data; and
- the management data: an event register, a settling account, the public key from authorisation.

7. A computerized, electronic invoice management system comprising the memory (704) and the data bus (701), **characterized in that** the system comprises additionally the following connected to the data bus (701):
- a database of invoice issuers (707) comprising information regarding issuers;
- a database of invoice receivers (705) comprising the identification data of the receivers;
- a database of entities executing the payments (702) comprising the identification data of entities authorised to complete the payment of issuers' invoices by the receivers;
- an authorisation database (706) storing the data required for authorisation of electronic signatures and connections between the receiver's clients;
- a database of invoice documents (703); and
- a controller (709) configured to cooperate with the database of invoice issuers (707), the database of invoice receivers (705), the database of entities completing the payments (702), the authorisation database (706), the database of invoice documents (703) and configured to implement the method comprising the following steps:
- authorising (801) at least two invoice issuers to issue invoices in the computer electronic invoice system and saving the data of invoice issuers in the computer database of invoice issuers (707);
- authorising (802) at least two invoice receivers to receive invoices in the computer electronic invoice system and saving the data of invoice receivers in the computer database of invoice receivers (705);
- receiving and executing (803), by means of telecommunication links, the request to issue invoice by one of the authorised invoice issuers for the given receiver;
- entitling (804) the receiver to read the invoice by means of authorisation;
- presenting the invoices in response to the receiver's request (805) in order to order execution of the payment for the selected receiver's invoice (806) in the system;
- presenting the status of the completion of the payment upon the issuer's request (807).

8. A computerized, electronic invoice management system according to claim 7, **characterized in that** the database of invoice receivers (705) and the database of invoice issuers (707) is a repository of personal data buffers comprising the encrypted identification data of the issuers and the receivers.
